# EUROPEAN PATENT SPECIFICATION

(11) **EP 1 210 235 B1**
(45) Date of publication and mention of the grant of the patent: **17.10.2007**
(21) Application number: 01921137.4
(22) Date of filing: 13.04.2001
(51) Int. Cl.: B60G 9/00, B60G 9/02

(54) **WHEEL AXLE ASSEMBLY**
RADAUFHÄNGUNGSSYSTEM
ENSEMBLE ESSIEU-ROUE

(30) Priority: 17.04.2000 CZ 20001380; 17.04.2000 CZ 20001381
(43) Date of publication of application: 05.06.2002
(73) Proprietor: Kovar, Josef, 110 00 Praha 1 (CZ)
(72) Inventor: Kovar, Josef, 110 00 Praha 1 (CZ)
(74) Representative: Novotny, Karel
(86) International application number: PCT/CZ2001/000022
(87) International publication number: WO 2001/079009

(56) References cited:
- FR-A- 658 925
- FR-A- 666 209
- FR-A- 1 191 743
- GB-A- 2 296 223

## Description

### Field of the invention

The invention relates to a wheel axle assembly, specifically for road vehicles, comprising an axle body, which is connected at its both ends to axle wheels, and is spring mounted on the vehicle frame as defined in the independent claims. The features of the respective preambles are known from GB-A-2 296 223.

### Description of prior art

The road vehicles with a rigid wheel axle have the wheels carried by an axle body disposed transversally with respect to the vehicle longitudinal axis. The axle body is sprung mounted on the vehicle frame by means of sprigs and, as the case may be, transversally stabilized by means of additional struts. A vehicle axle drive box with laterally extending propeller shafts connected to the vehicle wheels is located on the vehicle frame above the axle body. Such type of assembly has certain disadvantage of a low ground clearance defined by the distance between the horizontally disposed axle body and the road surface. In the effort to enhance the ground clearance the gear speed reducers are incorporated into the wheels what of course brings about increased production costs of the whole axle.

The arrangement with the axle drive box incorporated in the axle body brings about further reduction of the ground clearance and moreover additional unsprung weight.

Where the axles are provided with independently suspended wheels, which designs are used specifically for the road vehicles to improve the vehicle driving properties, the wheels are suspended by means of upper and lower wishbones and by connecting the wheel to a spring unit. Such wheel suspension is often replaced by so called "McPherson" type axle, where the wheel is mounted for rotatable motion with respect to the lower wishbone and to a combined spring and shock absorbing unit that is by its upper portion pivotally coupled with the vehicle frame to substitute the original function of a wishbone. In an off road operation of the vehicle with independently suspended wheels the ground clearance is considerably restricted due to a relatively small wheel swinging amplitude due to a limited span of the wishbones. In the situation where both axle wheels move upwardly the ground clearance of the vehicle becomes substantially reduced and the capability of the vehicle to operate off road is thus limited. The independent suspension is also used with the off road trucks assigned for alternative operation on regular roads, nevertheless the problem accompanied by said restricted off road operability caused by the limited length of the wishbones survives.

It is the object of the invention to provide a wheel axle assembly by which the ground clearance of the vehicle required for off road operations is similar to that achieved with the vehicles provided with rigid wheel axles whereby the desired driving properties characterizing the vehicles with independently suspended wheels and low portion of unsprung weight are preserved.

### Summary of the invention

This object is achieved by the features of the independent claims. The main advantages of said wheel axle assembly is that the vehicle ground clearance may be increased to the same extend as is usual with a rigid - portal wheel axle whereby the unsprung weight is substantially reduced and the production costs are kept low.

The wheels of the wheel axle are connected to the axle body over longitudinal arms.

The bottom mounting between the wheels and the axle body may be in the form of a ball joint or a pivotally coupling an the upper mounting may be as well in the form of a ball joint or a pivotally coupling.

The wheels of the wheel axle may be connected to a spring unit consisting of a helical spring and a shock absorber.

In still another embodiment of the invention the wheel axle assembly may comprise two axle bodies one situated in front of the spring unit the second behind the spring unit.

### Brief description of the drawings

The wheel axle assembly according to the invention will now be described in more details with reference to the accompanying drawings where:
Fig. 1 shows a perspective view of a portion of a wheel axle;
Fig. 2 and 3 show schematic views of a wheel axle taken in the direction of the vehicle longitudinal axis where in Fig. 2 the wheels of the wheel axle are positioned in one plane while in Fig. 3 the same wheels are positioned in different parallel planes;
Fig. 4 shows a schematic view of another wheel axle;
Fig 5 to 7 shows schematic side views of other different portions of the wheel axle;
Fig. 8 to 15 show a wheel axle provided with a "McPerson" spring unit where,

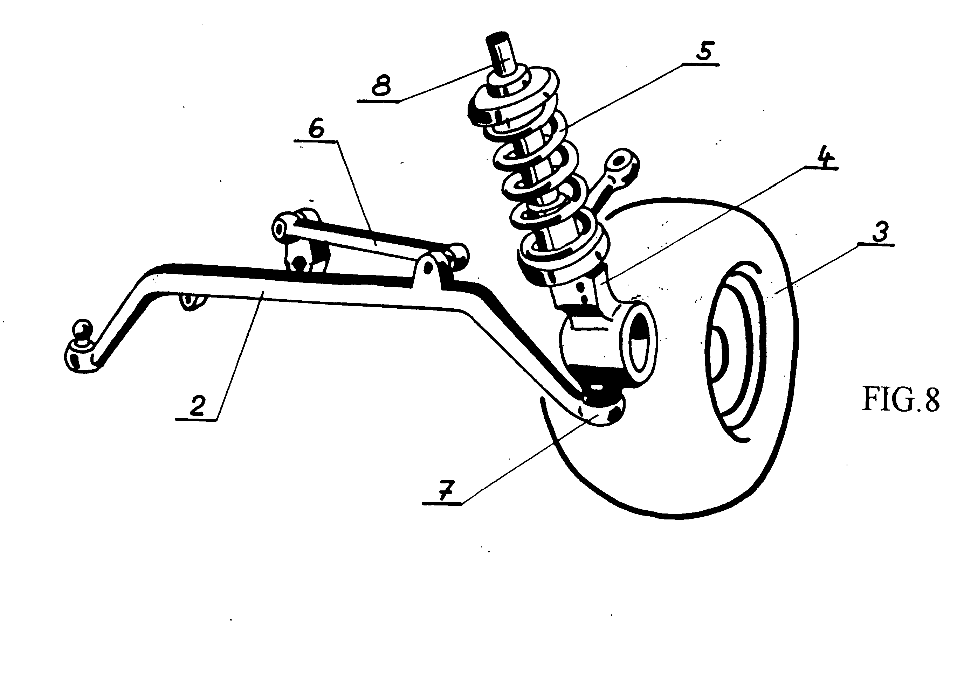

Fig 8 shows a perspective view of a portion of a wheel axle provided with a spring unit;

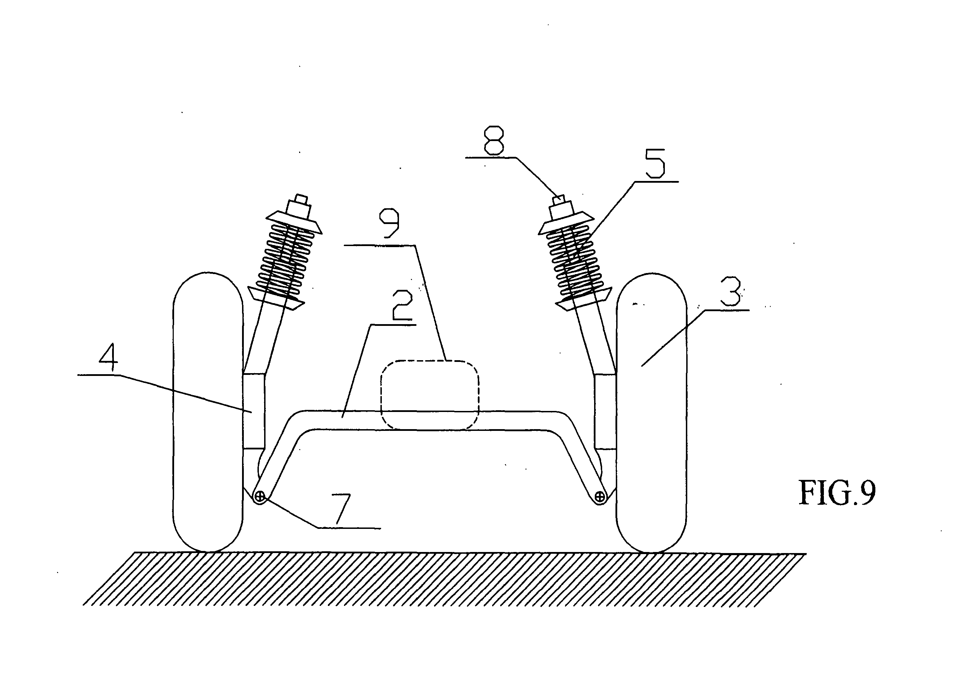

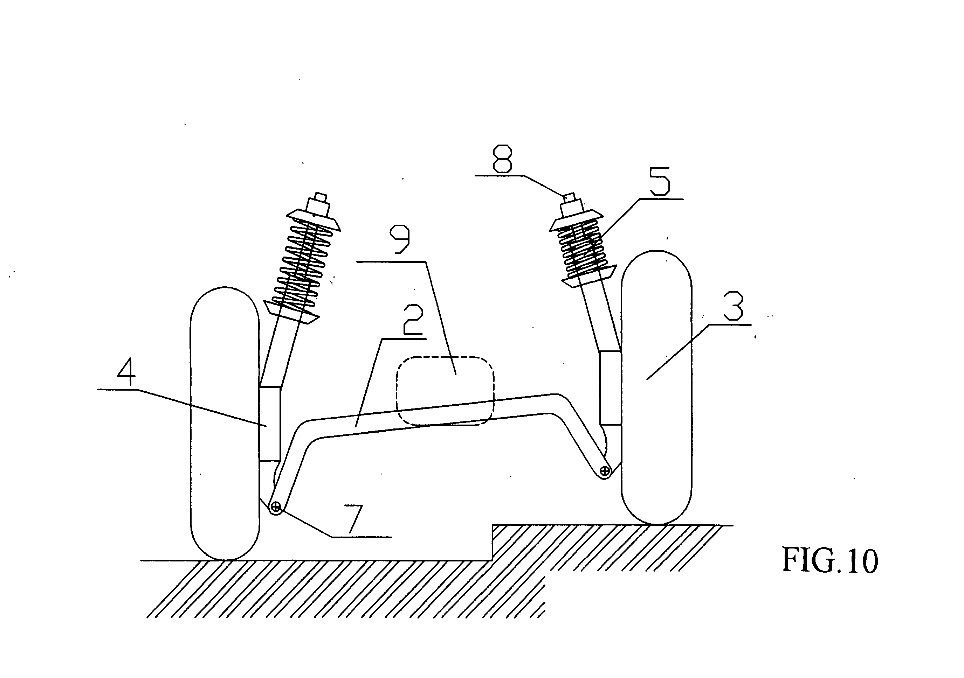

Fig. 9 and 10 show schematic views of another wheel axle taken in the direction of the vehicle longitudinal axis where in Fig. 9 the wheels of the wheel axle are positioned in one plane while in Fig. 10 the same wheels are positioned in different parallel planes;

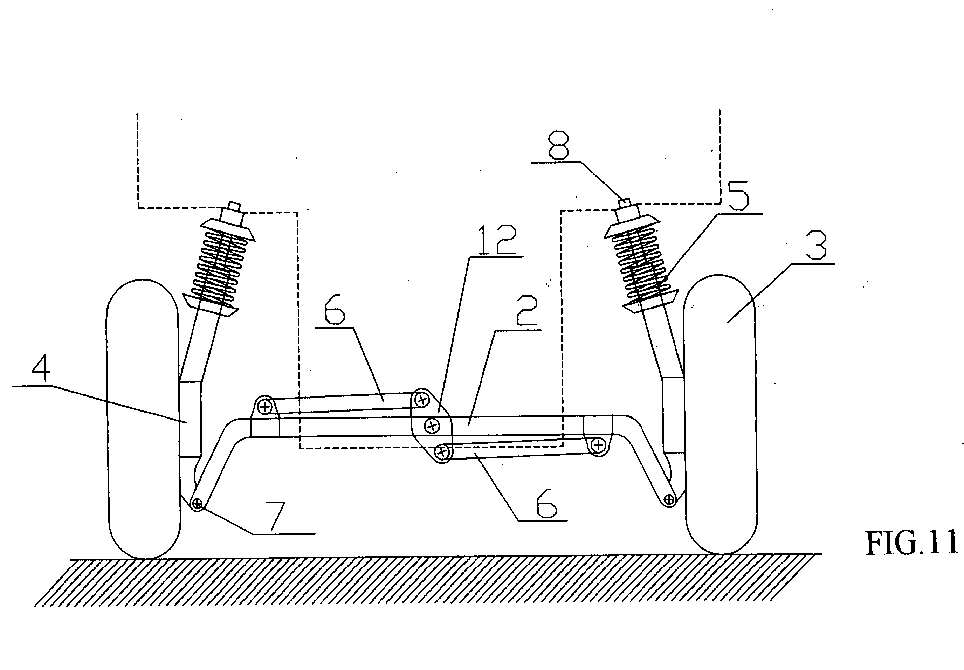

Fig. 11 shows a schematic view of another wheel axle;

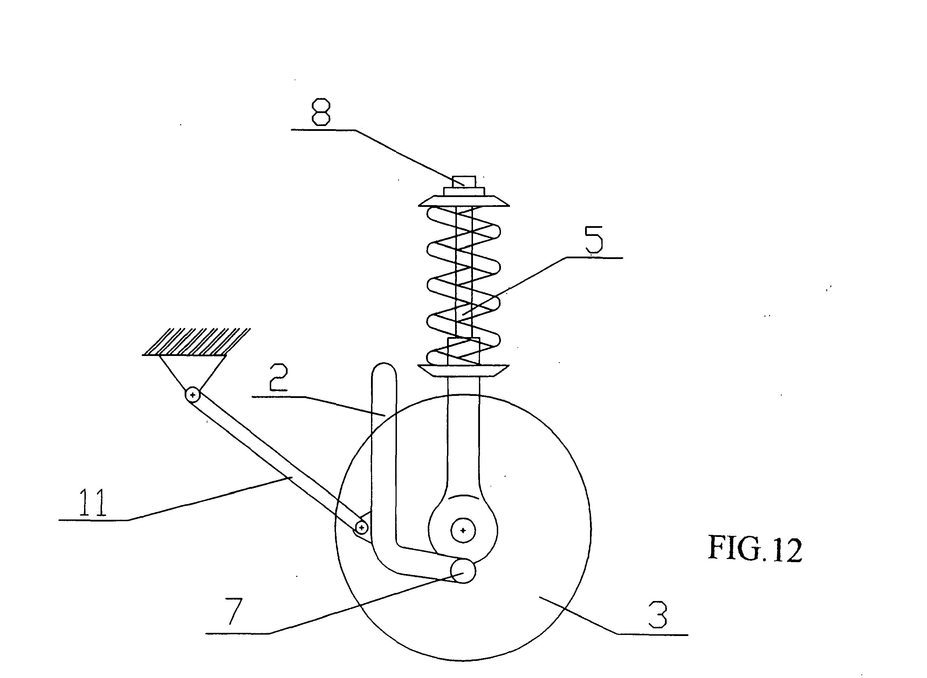

Fig 12 to 15 show schematic side views of embodiments of a portion of the wheel axle according to the invention.

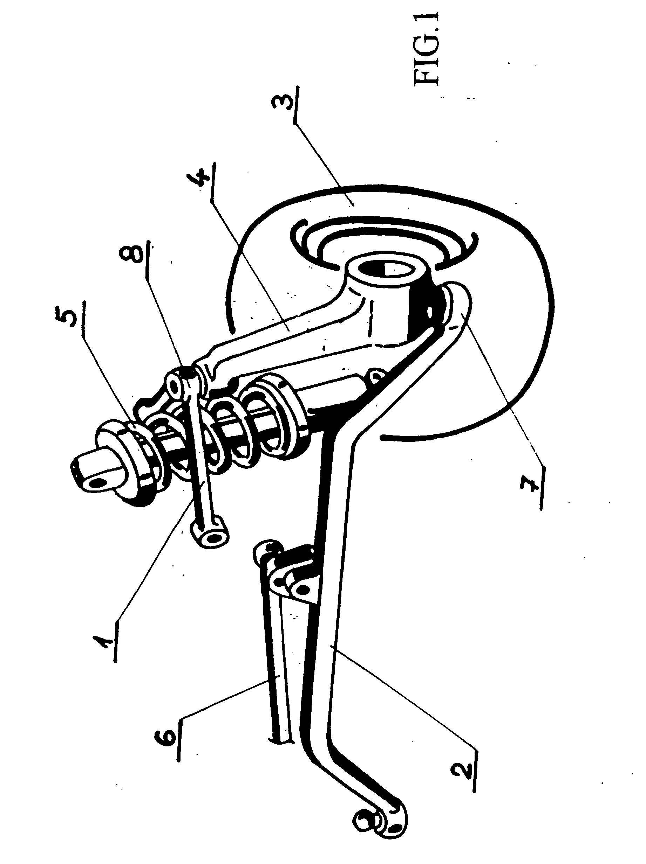

Figures 1 to 11 are not part of the invention, but serve for understanding.

### Examples

Referring now to Fig 1 a wheel **3** is carried in a hub of a bracket **4**. The bracket **4** is coupled by means of a bottom mounting **7** to an axle body **2** and by means of an upper mounting **8** to a vehicle frame, which may constitute an integral part of the vehicle body. In this embodiment the mountings **7**, **8** are performed as ball joints enabling the steering of the wheels of the axle.

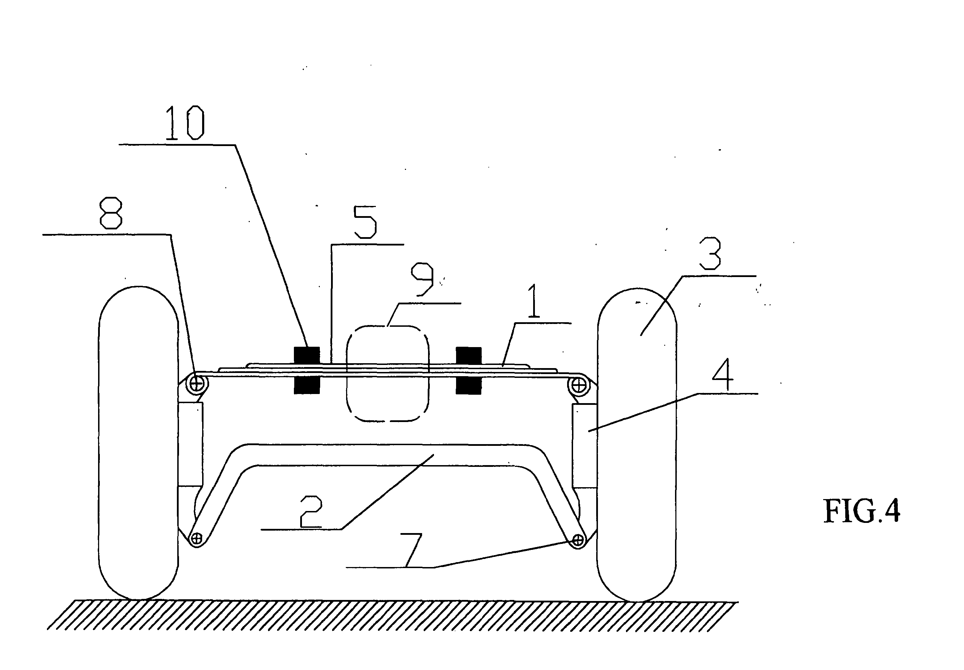

The upper mounting **8** is coupled with at least one connecting arm **1** pivotally mounted on the vehicle frame while the bottom mounting **7** is coupled with the axle body **2**. The axle body **2** is disposed transverse relative to the longitudinal vehicle axis and its opposite end is coupled with the bottom mounting of the opposite wheel **3** of the wheel axle. The transversal guiding of the axle body **2** is secured by a transverse guide **6** or so called "Panhard" type rod. The wheels **3** are sprung by a spring unit **5** that may be executed as a helical spring, leaf spring, torsion rod, pneumatic spring unit, liquid spring unit, each independently or in combination with another one and/or in combination with a shock absorber. The transversal guiding of the axle body **2** may be also secured by two transversal guides supported by a balance beam (Fig. 4, 11 ) mounted on the axle body **2** or an engine.

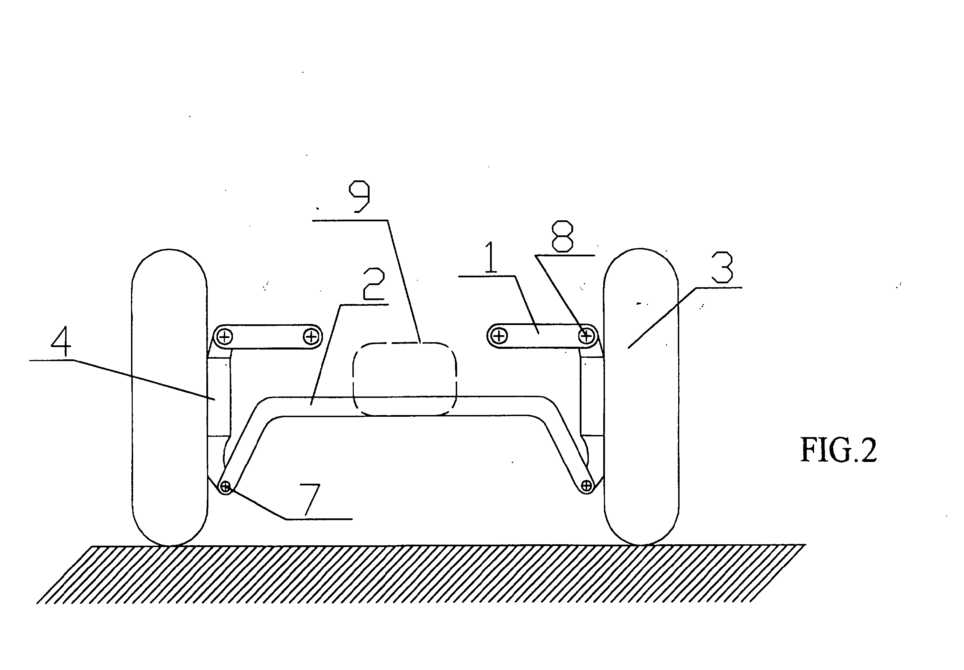

An alternative embodiment of the wheel axle with non-steered wheels is shown in Fig. 2.

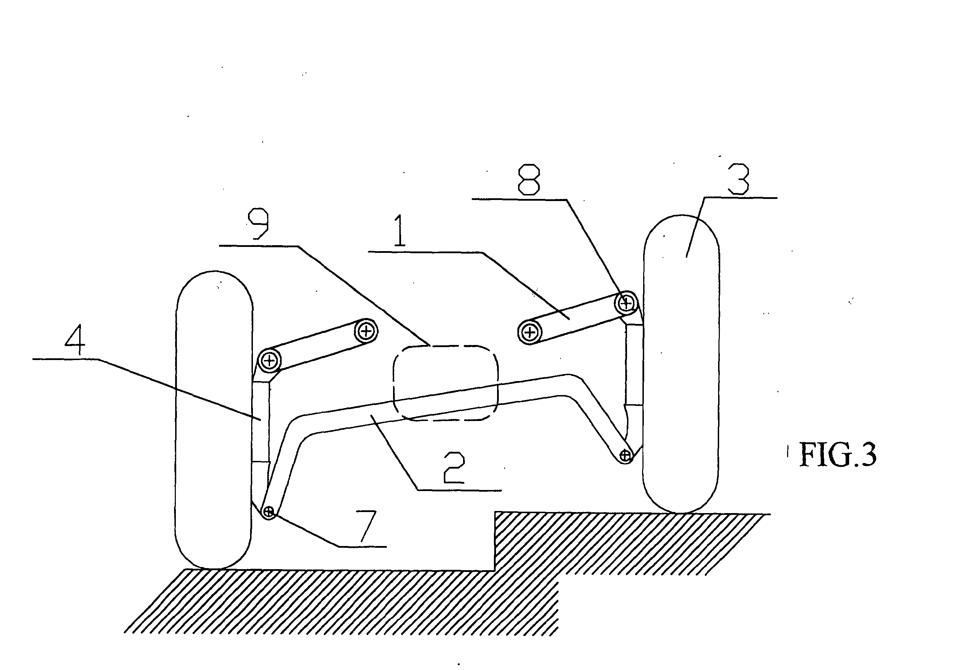

The upper connecting arm is pivotally coupled with the vehicle frame and the bracket **4** and the axle body **2** is also pivotally coupled with the wheels. The axle body **2** may support the engine **9.** In Fig. 3 the same wheel axle as illustrated in Fig. 2 is shown but with one vehicle side wheel **3** resting on a level surface that is in different horizontal plane with respect to that of the wheel **3** of the opposite end of the wheel axle.

Likely a wheel axle in Fig 4 is substantially the same as that shown in Fig. 2 provided that the upper connecting arm **1** is in the form of a transversal leaf spring fixed to the vehicle frame by two resilient blocks **10** disposed symmetrically to the vehicle longitudinal axis.

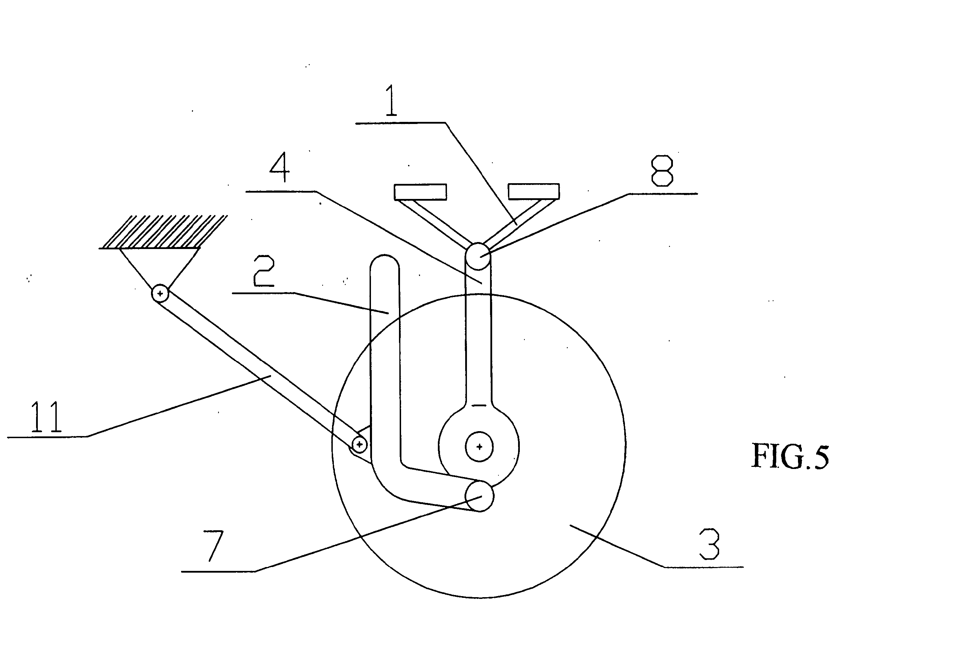

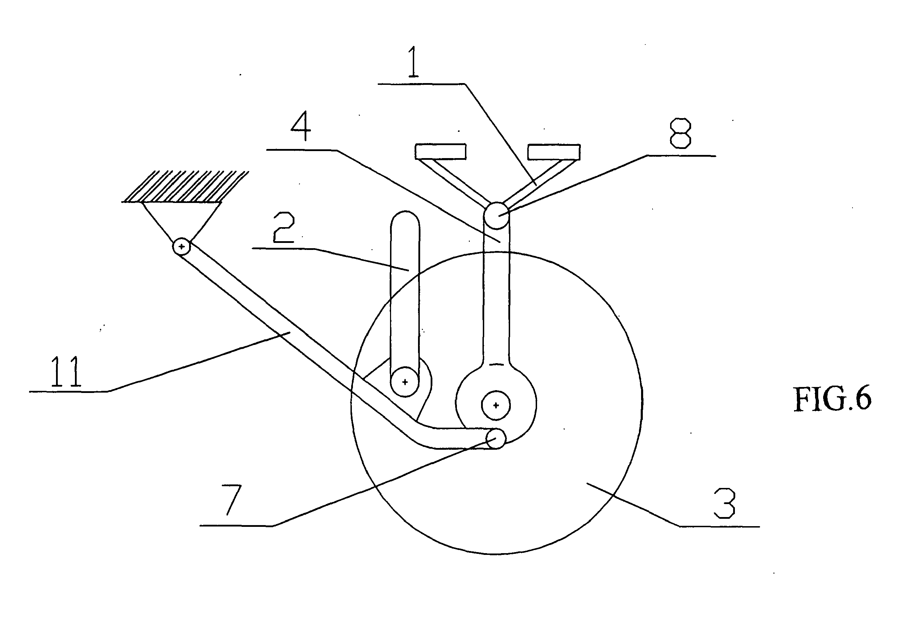

The longitudinal guiding of the axle body **2** that is secured by longitudinal arms **11** is apparent from Fig. 5. One end of the longitudinal arm **11** is mounted on the vehicle frame while the other end on the axle body **2.** Alternatively, as shown in Fig. 6, one end of the longitudinal arm **11** may be mounted on the vehicle frame and its other end coupled with the bottom mounting **7** of the bracket **4.** In this embodiment, the body axle is not directly connected to the bottom mounting 7 of the bracket **4** but is pivotally coupled with the longitudinal arm **11.**

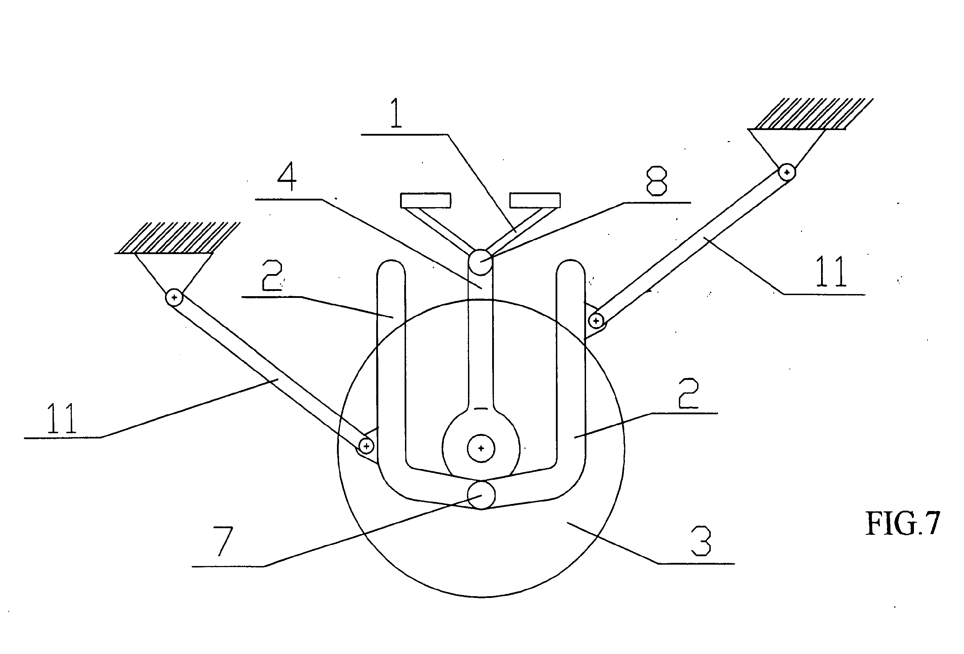

In another embodiment of the invention the wheel axle assembly may comprise two axle bodies **2** as show in Fig. 7 one of which is situated in front of a spring unit **5** and the second one behind the spring unit **5** relative to the longitudinal vehicle axis.

In similar embodiment with two axle bodies each axle body **2** may be independently spring mounted ( not shown in the drawings ) without the necessity to install the central spring unit **5** according to Fig. 7.

With reference to the embodiment in Fig. 8 the wheel **3** is mounted in a hub of the bracket **4.** The bracket **4** is coupled with the axle body **2** by means of a bottom mounting **7** and is constitutes also a part of the spring and/or shock absorbing unit **5,** hereinafter designated as the spring unit **5** that may be executed as a McPherson type unit, or as the case may be, as a shock absorber where the spring is located outside the shock absorber, etc.. The spring unit **5** is mounted on the vehicle body or a frame as a portion thereof by means of the upper mounting **8.** The spring unit **5** may be combined with another resilient element such as torsion rod, pneumatic spring, liquid spring or as a combination of a number of spring elements. In the exemplary embodiment the mountings **7, 8** are in the form of ball joints enabling the steering of the axle wheels. The bottom mounting **7** is connected to the axle body **2.** The axle body **2** is disposed transversal relative to the vehicle longitudinal axis and its opposite end is connected to the bottom mounting of the opposite wheel of the wheel axle. The transversal guiding of the axle body is secured by a transversal guide **6,** for example in the form of a "Panhard" rod".

Fig. 9 shows an alternative wheel axle assembly with non-steered wheels where the axle body is pivotally coupled with the wheels. The axle body **2** may support an engine **9.** The same axle body is shown in Fig. 10 in the situation, where one vehicle side rests by its wheel 3 on a ground level which is in other horizontal plane than that of the transversally opposite wheel **3** of the axle body **2.**

Another wheel axle assembly is shown in Fig. 11 the only difference from that in Fig. 9 being in that the axle body **2** is connected to two transversal guides **6** the ends of which are mounted on the vehicle frame over a balance beam **12** fixed on the axle body **2.** The balance beam may be alternatively secured to an engine **9** (as shown in Fig. 10) with the outer ends of the transversal guides coupled with the axle body **2.**

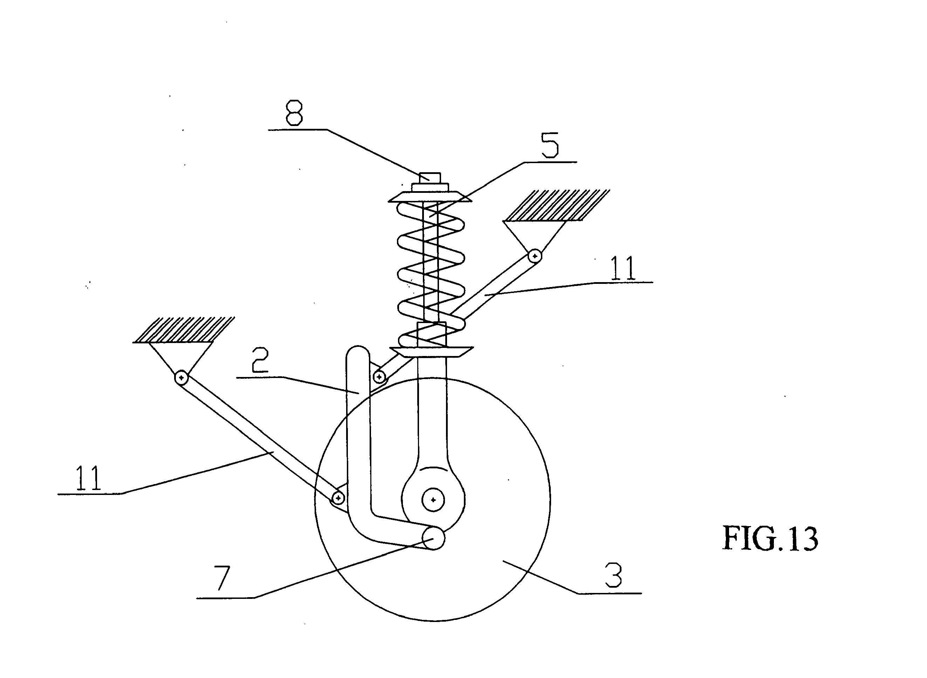

Fig. 12 shows the longitudinal guiding of the axle body **2** executed by means of the longitudinal arms **11.** One end of each longitudinal arm **11** is coupled to the vehicle frame and the other end to the axle body **2.** Similar arrangement as in Fig 12 is shown in Fig. 13 where the axle body **2** is connected to two longitudinal arms **11.**

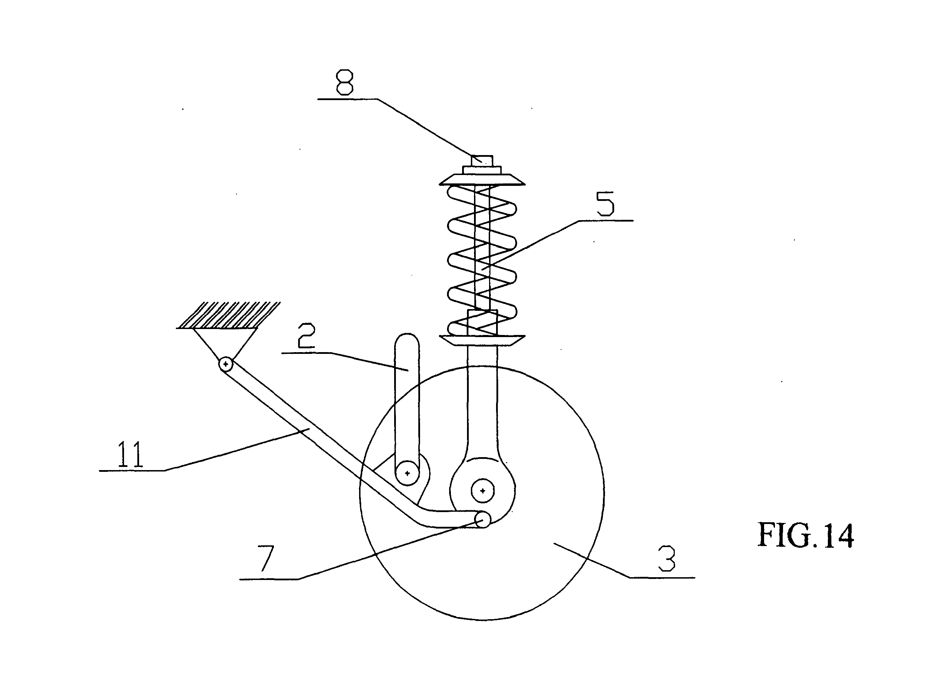

According to another embodiments of the invention illustrated in Fig. 14 one end of the longitudinal arm **11** is coupled with the vehicle frame and the other end with the bottom mounting of the bracket **4** wherein the axle body **2** is connected to the bottom mounting 7 of the bracket **4** indirectly, in that it is mounted on the longitudinal arm **11.**

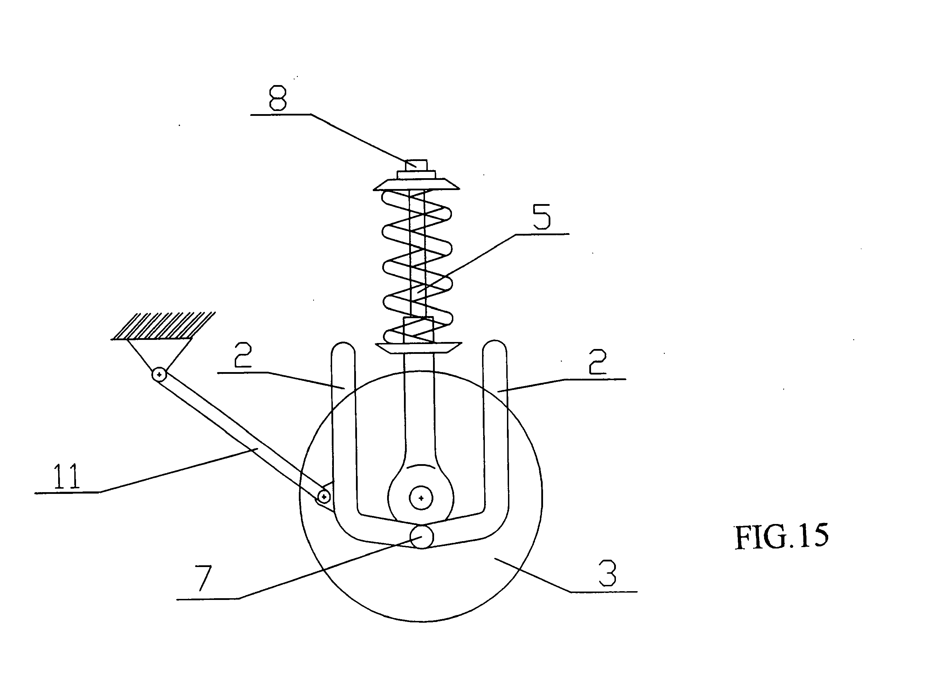

In the embodiment with two axle bodies as shown in Fig. 15 one axle body is situated in front of the spring unit **5** and the second behind the spring unit **5** with respect to the longitudinal vehicle axis.

## Claims

1. A wheel axle assembly, specifically for road vehicles, comprising at least one axle body which is connected at its both ends to axle wheels, is spring mounted on the vehicle frame and is secured by longitudinal arms (11) one end thereof being mounted to the vehicle frame while the other end is mounted on one axle body (2), whereby the wheels (3) of the wheel axle are mutually connected by
means of the at least one axle body (2) over a bottom mounting (7) and further connected to a vehicle frame over an upper mounting (8) as a part of a spring unit (5) **characterized in that** the at least one axle body (2) is disposed in front of the spring unit (5) and/or behind the spring unit (5) of the wheels (3).

2. A wheel axle assembly, specifically for road vehicles, comprising an axle body which is connected at its both ends to axle wheels and is spring mounted on the vehicle frame whereby the wheels (3) of the wheel axle are mutually connected by means of the axle body (2) and further connected to a vehicle frame over an upper mounting (8) as a part of a spring unit (5) **characterized in that** the at least one axle body (2) is disposed in front of the spring unit (5) or behind the spring unit (5) of the wheels (3)*,* and
**in that** the wheels (3) of the wheel axle are connected to the axle body (2) over longitudinal arms (11), one end thereof being mounted on the vehicle frame the other end thereof being mounted to a wheel (3) over a bottom mounting (7).

3. A wheel axle assembly as claimed in any of claims 1 and 2 **characterized in that** the bottom mounting (7) is in the form of a ball joint.

4. A wheel axle assembly as claimed in any of claims 1 and 2 **characterized in that** the bottom mounting (7) is in the form of a pivotally coupling.

5. A wheel axle assembly as claimed in any of claims 1 to 4 **characterized in that** the upper mounting (8) is in the form of a ball joint.

6. A wheel axle assembly as claimed in any of claims 1 to 4 **characterized in that** the upper mounting (8) is in the form of in the form of a pivotally coupling.

7. A wheel axle assembly as claimed in any of claims 1 to 6 **characterized in that** the wheels (3) of the wheel axle are connected to a spring unit (5) consisting of a helical spring and a shock absorber.

## Patentansprüche

1. Radaufhängugssystem, insbesondere für Strassenfahrzeuge, mit wenigstens einem Achstrträger, der auf seinen beiden Enden mit den Rädern verbundet ist und bezüglich auf den Rahmen abgefedert ist, und mit Längsarmen verbunden ist, deren ein Ende zum Fahrzeugrahmen angeschlossen ist und zweites Ende mit den Achsträger verbunden ist, wobei die Räder (3) der Achse mittels wenigstens einen Achsträger (2) über untere Auflagerung (7) miteinander verbunden sind und über obere Auflagerung (8), die ein Teil der Feder einheit (5) bildet, mit dem Fahrzeugrahmen verbunden sind, **dadurch gekennzeichnet, dass** wenigstens ein Achsträger (2) vor der Federeinheit (5) und/oder hinter der Federeinheit (5) der Räder (3) angeordnet ist.

2. Radaufhängugssystem, insbesondere für Strassenfahrzeuge, mit einem Achsträger, der auf seinen beiden Enden mit den Rädern verbundet ist und bezüglich auf den Rahmen abgefedert ist, wobei die Räder (3) der Achse miteinander durch einen Achsträger (2) verbunden sind und mit dem Rahmen über obere Auflagerung (8), die ein Teil der Federeinheit (5) bildet, mit dem Fahrzeugrahmen verbunden sind, **dadurch gekennzeichnet, dass** wenigstens ein Achsträger (2) vor der Federeinheit (5) oder hinter der Federeinheit (5) der Räder (3) angeordnet ist und seine Enden mit den Rädern (3) über untere Auflagerungen (7) verbunden sind.

3. Radaufhängugssystem nach Anspruch 1 und 2, **dadurch gekennzeichnet, dass** die untere Auflagerung (7) kugelartig ist.

4. Radaufhängugssystem nach Anspruch 1 und 2, **dadurch gekennzeichnet, dass** die untere Auflagerung (7) zapfenartig ist.

5. Radaufhängugssystem nach einem der Ansprüche 1 bis 4, **dadurch gekennzeichnet, dass** die obere Auflagerung (8) kugelartig ist.

6. Radaufhängugssystem nach einem der Ansprüche 1 bis 4, **dadurch gekennzeichnet, dass** die obere Auflagerung (8) zapfenartig ist.

7. Radaufhängugssystem nach einem der Ansprüche 1 bis 6, **dadurch gekennzeichnet, dass** die Räder (3) der Achse mit der Federeinheit (5), die durch Schraubenfeder mit einem Dämpfer gebildet ist, verbunden sind.

## Revendications

1. La disposition de l'essieu, particulièrement des véhicules routiers, avec au moins une porte-essieu qui est unie à ses deux bouts avec des roues de l'essieu et qui est séparée élastiquement du chassis de véhiculet uni par les branches longitudinales dont un bout est uni au chasssis de voiture et l'autre est uni avec la porte-essieu(2); quand les roues (3) de l'essieu sont mutuellement unies par l'intermédiaire d'au moins d'une porte-essieu (2) à travers d'un placement inférieur (7) et au chassis de voiture et à travers d'un placement supérieur (8) formant un composant de l'unité élastique (5) **caractérisée par** l'arrangement d'au moins une porte-essieu (2) devant/apres l'unité élastique (5) des roues (3).

2. La disposition de l'essieu, particulièrement des véhicules routiers; avec une porte-essieu qui est unie à ses deux bouts avec des roues de l'essieu et est séparée élastiquement du chassis de véhicule quand les roues (3) de l'essieu sont mutuellement unies par l'intermédiaire d'une porte-essieu (2) au chassis à travers d'un placement supérieur (8) formant un composant de l'unité élastique (5) **caractérisée par** l'arrangement d'au moins d'une porte-essieu (2) devant l'unité élastique (5) des roues (3) formant un composant de l'unité élastique (5) **caractérisée par** l'arrangement d'au moins d'une porte-essieu (2) devant ou apres l'unité élastique (5) des roues (3) Les autres bouts sont unis avec des roues (3) a travers le placement inférieur;:

3. La disposition de l'essieu d'après les points 1 et 2 **caractérisée par le fait que** le placement inférieur (7) est sphérique:

4. La disposition de l'essieu d'après les points 1 et 2 **caractérisée par le fait que** le placement inférieur (7) est axial:

5. La disposition de l'essieu d'après quelque des points 1 à 4; **caractérisée par le fait que** le placement supérieur (8) est sphérique

6. La disposition de l'essieu d'après quelque des points 1 à 4; **caractérisée par le fait que** le placement supérieur (8) est axial:

7. La disposition de l'essieu d'après quelque des revendications 1 à 6 **caractérisée par le fait que** les roues (3) de l'essieu sont unis avec un élément élastique(5) formé par un ressort en hélice: avec un amortiseur.
